# Europäisches Patentamt

## European Patent Office

## Office européen des brevets

(11) Veröffentlichungsnummer: **0 233 552 B1**

(12)

# EUROPÄISCHE PATENTSCHRIFT

(45) Veröffentlichungstag der Patentschrift:
13.09.89

(51) Int. Cl.⁴: **B60R 13/06, E06B 7/23**

(21) Anmeldenummer: **87101546.7**

(22) Anmeldetag: **05.02.87**

(54) **Elastische Dichtung.**

(30) Priorität: **08.02.86 DE 8603371 U**

(43) Veröffentlichungstag der Anmeldung:
**26.08.87 Patentblatt 87/35**

(45) Bekanntmachung des Hinweises auf die Patenterteilung:
**13.09.89 Patentblatt 89/37**

(84) Benannte Vertragsstaaten:
**DE ES FR GB IT SE**

(56) Entgegenhaltungen:
**GB-A- 2 036 840**
**GB-A- 2 160 920**
**US-A- 4 112 623**

(73) Patentinhaber: **METZELER Gesellschaft mit beschränkter Haftung, Gneisenaustrasse 15, D-8000 München 50(DE)**

(72) Erfinder: **Kranz, Jürgen, Kirchstrasse 2, D-8900 Lindau/Bodolz(DE)**

(74) Vertreter: **Michelis, Theodor, Dipl.-Ing. et al, Gneisenaustrasse 15, D-8000 München 50(DE)**

**Beschreibung**

Die Erfindung bezieht sich auf eine elastische Dichtung für Kanten eines Blechbords, insbesondere in Kraftfahrzeugen, mit beiderseits des Blechbords liegenden Haftstegen und einen, die Kante überwölbenden Hohlkammerbereich.

Eine derartige Dichtung ist beispielsweise aus der DE-A 33 46 070 bekannt. Derartige Dichtungen dienen üblicherweise zur Abdeckung und Abdichtung beispielsweise einer Kofferraumkante in Kraftfahrzeugen. Sie werden in ihrer endgültigen Form extrudiert und dann von Hand auf die abzudeckende Kante aufgeschoben und ggf. noch über Haftstege angepreßt, um einen sicheren Schutz der Kante zu gewährleisten und um zu verhindern, daß insbesondere Feuchtigkeit eindringt. Eine derartige Montage von Hand ist jedoch relativ aufwendig und zeitraubend und darüber hinaus oftmals in seiner Qualität von der handwerklichen Fertigkeit des die Dichtung Montierenden abhängig.

Der vorliegenden Erfindung liegt demgegenüber die Aufgabe zugrunde, eine derartige Dichtung zu schaffen, zu schaffen, die auch vollmechanisiert, beispielsweise von Robotern, auf die zu schützende Kante aufgebracht werden kann.

Zur Lösung dieser Aufgabe ist erfindungsgemäß vorgesehen, daß das Dichtungsprofil als abrollbares, flachliegendes, extrudiertes Band mit einem gewölbten mittleren Bereich und beiderseits horizontal anschließenden, mit je einem doppelseitigen Klebeband beschichteten Stegen vorliegt und auf der Innenseite des gewölbten Bereiches Sollknickstellen aufweist und mittels Roboter-Hilfsmitteln über einen Dorn faltbar und auf die zu schützende Kante anrollbar ist.

Eine derartige, zunächst als flaches, aufgerolltes Band vorliegende Dichtung mit vorgeformten Bereichen kann dann einfach von der Rolle abgezogen und automatisch auf die zu schützende Kante aufgeformt und angepreßt werden, wobei durch das Anbringen solcher Sollknickstellen in vorgegebenen Bereichen jede gewünschte Form der die Kante überwölbenden Hohlkammer geschaffen werden kann.

Dabei kann der die Hohlammer bildende gewölbte Bereich auf seiner Außenseite mit einer abragenden Dichtlippe versehen sein.

Darüber hinaus ist es zweckmäßig, wenn das Dichtungsband im Übergangsbereich zwischen den Haftstegen und dem gewölbten Bereich mit Einkerbungen auf der Außenseite und Stegen auf der Innenseite versehen ist derart, daß die Stege nach Faltung des Bandes sich einander übergreifend nebeneinander liegen.

Anhand einer schematischen Zeichnung sind Aufbau und Funktionsweise eines Ausführungsbeispiels nach der Erfindung näher erläutert. Dabei zeigen

Fig. 1 eine Dichtung in perspektivischer Ansicht, zunächst flachliegend und dann über ein Blechbord gefaltet und

Fig. 2 der Endzustand der das Blechbord umhüllenden Dichtung.

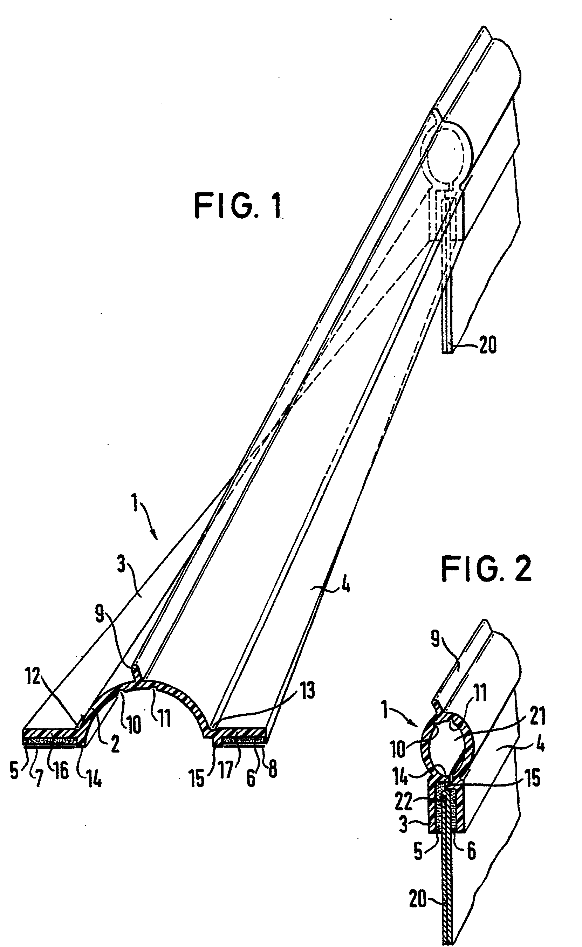

Wie man aus der perspektivischen Ansicht nach Fig. 1 ersieht, weist die Dichtung 1 einen gewölbten mittleren Bereich 2 auf, an den sich seitlich die beiden zunächst horizontal liegenden Stege 3 und 4 anschließen, die auf ihrer Unterseite mit je einem doppelseitigen Klebeband 5 und 6 belegt sind, das zunächst mit einer Abdeckfolie 7 und 8 geschützt sein kann. Der mittlere gewölbte Bereich 2 weist auf seiner Oberseite eine abragende Dichtlippe 9 und auf seiner Innenseite, z. B. beiderseits der Dichtlippe 9, Sollknickstellen 10 und 11 auf. Im Übergangsbereich zwischen dem gewölbten Bereich 2 und den seitlich angesetzten Stegen 3 und 4 sind auf der Oberseite weitere Sollknickstellen 12 und 13 sowie auf der Unterseite Stege 14 und 15 vorgesehen, von denen der Steg 14 unmittelbar die Fortsetzung des gewölbten Bereiches 2 bildet, während der Steg 15 etwas seitlich versetzt zur Innenkante des gewölbten Bereiches 2 liegt.

Darüber hinaus können in die seitlichen Stege 3 und 4 zugfeste Fäden 16 und 17 einvulkanisiert sein, um eine Längendehnung der Dichtung zu verhindern.

Das in der dargestellten Form vorliegende Profil kann als flaches Band von einer nicht näher dargestellten Rolle abgezogen und dem abzudeckenden Blechbord 20 zugeführt werden, wo es dann von einem ebenfalls nicht dargestellten Roboter über einen Dorn um das Blechbord gefaltet und angerollt werden kann.

Der endgültige Montagezustand ist aus Fig. 2 ersichtlich. Der gewölbte Bereich 2 stellt sich jetzt als Hohlkammer 21 oberhalb der Kante 22 des Blechbords 20 dar, während die beiden Stege 3 und 4 mit dem doppelseitigen Klebeband 5 und 6 seitlich an den oberen Bereich des Blechbordes 10 angerollt sind und somit eine fest haftende Verbindung herstellen. Entsprechend der auf der Innenseite des gewölbten Bereiches 2 vorgesehen Sollknickstellen 10 und 11 nimmt die Hohlkammer nach Faltung die gewünschte Form an.

Mit der beschriebenen Ausbildung einer derartigen Dichtung und der entsprechenden Anordnung von Sollknickstellen ist es also möglich, eine derartige Dichtung zunächst als flaches, aufgerolltes Band herzustellen und dieses dann automatisch auf eine zu schützende Blechkante aufzubringen, wobei jede gewünschte Form durch das Angringen entsprechender Sollknickstellen erreicht werden kann.

**Patentansprüche**

1. Elastische Dichtung (1) für Kanten (22) eines Blechbords (20), insbesondere in Kraftfahrzeugen, mit beiderseits des Blechbords (20) liegenden Haftstegen (3,4) und einem, die Kante (22) überwölbenden Hohlkammerbereich (21), dadurch gekennzeichnet, daß das Dichtungsprofil (1) als abrollbares, flach liegendes, extrudiertes Band mit einem gewölbten mittleren Bereich (2) und beiderseits horizontal anschließenden, mit je einem doppelseitigen Klebeband (5,6) beschichteten Stegen (3,4) vorliegt und auf der Innenseite des gewölbten Bereiches (2) Sollknickstellen (10,11) aufweist und mittels Roboter-Hilfsmitteln über einen Dorn faltbar und auf die zu schützende Kante (22) anrollbar ist.

2. Elastische Dichtung nach Anspruch 1, dadurch gekennzeichnet, daß der die Hohlkammer (21) bildende gewölbte Bereich (2) auf seiner Außenseite mit einer abragenden Dichtlippe (9) versehen ist.

3. Elastisches Dichtungsprofil nach Anspruch 1, dadurch gekennzeichnet, daß die Halftstege (3,4) einvulkanisierte, längenstabile Fäden (16,17) aufweisen.

4. Elastische Dichtung nach Anspruch 1 bis 3, dadurch gekennzeichnet, daß das Dichtungsband (1) im Übergangsbereich zwischen den Haftstegen (3,4) und dem gewölbten Bereich (2) mit Einkerbungen (12,13) auf der Außenseite und Stegen (14,15) auf der Innenseite versehen ist derart, daß die Stege (14,15) nach Faltung des Bandes (1) sich übergreifend nebeneinander liegen.

## Claims

1. Elastic sealing (1) for the edges (22) of a metal plate (20), in particular in motor vehicles, comprising adhesive flanges (3, 4) disposed one on each side of the metal plate (20) and a hollow chamber area (21) arching over the edge (22), characterised in that the sealing profile (1) is a flat, extruded strip which can be rolled, and comprises an arched central area (2) with horizontally adjoining flanges (3, 4) disposed one on each side, each coated with a double-sided adhesive strip (5, 6), and has set breaks (10, 11) on the inner face of the arched area (2), and, with the aid of robots, can be folded via a mandrel and rolled on to the edge (22) to be protected.

2. Elastic sealing according to claim 1, characterised in that the outer face of the arched area (2) forming the hollow space (21) is provided with a projecting sealing lip (9).

3. Elastic sealing profile according to claim 1, characterised in that the adhesive flanges (3, 4) have vulcanized longitudinally stable fibres (16, 17).

4. Elastic sealing according to claims 1 to 3, characterised in that in the transitional area between the adhesive flanges (3, 4) and the arched area (2), the outer face of the sealing strip (1) is provided with notches (12, 13) and the inner face with flanges (14, 15), in such a way that the flanges (14, 15) lie beside one another and overlap after the folding of the strip (1).

## Revendications

1. Joint d'étanchéité élastique (1) pour les arêtes (22) d'un bord de tôle (20), notamment de véhicules automobiles, comprenant des bandes d'adhérence (3, 4) situées de part et d'autre du bord de tôle (20) et une région en chambre creuse (21) surplombant l'arête (22), caractérisé en ce que le profilé d'étanchéité (1) affecte la forme d'une bande extrudée, à plat, qui peut être déroulée, qui a une région médiane voûtée (2) et des bandes (3, 4) se raccordant horizontalement de part et d'autre et revêtues chacune d'un ruban adhésif (5, 6) double-face, qui comporte, du côté intérieur de la région voûtée (2), des emplacements de pliage de consigne (10, 11), et qu'il est susceptible à l'aide de moyen auxiliaire d'un robot, d'être plié sur un mandrin et de se dérouler sur l'arête (22) à protéger.

2. Joint d'étanchéité élastique suivant la revendication 1, caractérisé en ce que la région voûtée (2) formant la chambre creuse (21) est munie sur son côté extérieur d'une lèvre d'étanchéité (9) en saillie.

3. Profilé d'étanchéité élastique suivant la revendication 1, caractérisé en ce que les bandes d'adhérence (3, 4) comportent des fils (16, 17) incorporés par vulcanisation et de longueur stable.

4. Joint d'étanchéité élastique suivant la revendication 1 à 3, caractérisé en ce que le ruban d'étanchéité (1) est munie dans la région de transition entre les bandes d'adhérence (3, 4) et la région voûtée (2) d'encoches (12, 13) du côté extérieur et de bandes (14, 15) du côté intérieur, de manière que les bandes (14, 15) se situent l'une à côté de l'autre et l'une sur l'autre après le pliage de la bande (1).

EP 0 233 552 B1

FIG. 1

1

3

9

12

2

10   11

5  7  16  14

13

15  17  6  8

20

FIG. 2

9

1

11

10

14

22

3

5   6

21

4

15

20